# EUROPEAN PATENT APPLICATION

(11) **EP 4 622 020 A1**
(43) Date of publication of application: **24.09.2025**
(21) Application number: 23891543.3
(22) Date of filing: 13.11.2023
(51) Int. Cl.: H01R 13/6591, H01R 13/03, H01R 24/38

(54) **CONNECTOR MODULE**

(30) Priority: 16.11.2022 JP 2022183377
(71) Applicant: HOSIDEN CORPORATION, Yao-shi, Osaka 581-0071 (JP)
(72) Inventor: KAWANISHI, Takahide, Yao-shi, Osaka 581-0071 (JP); YAMAZAKI, Masakazu, Yao-shi, Osaka 581-0071 (JP)
(74) Representative: LBP Lemcke, Brommer & Partner Patentanwälte mbB
(86) International application number: PCT/JP2023/040810
(87) International publication number: WO 2024/106396

(57) **Abstract**

A connector unit includes: a shaft-shaped terminal; a cylindrical shell (12); an insulator therebetween; and a shield (14) electrically connected to the shell (12). The shell (12) includes a flange (12c) protruding radially outward. The shield (14) has a through hole (14c). With a portion of the shell (12) through the through hole (14c), the shield (14) and the flange (12c) are electrically connected to each other by heat melting to provide an electrically conductive joined portion (S).

## Description

### Technical Field

This disclosure relates to a connector module.

### Background Art

Patent Literature 1 discloses a connector module including a terminal module and a shield case, the terminal module including a center conductor, a cylindrical insulating holder holding the center conductor, and a cylindrical electrically conductive shell.

The connector module disclosed in Patent Literature 1 is configured as follows: The terminal module is in a cylindrical section integral with a connector case. The shield case is inward of a wall of the connector case. The terminal module is inserted in an opening in the shield case so that two or more elastic portions at an edge of the opening are in contact with the outer surface of the terminal module. This allows the terminal module to be electrically connected to the shield case.

Patent Literature 2 discloses a connector including an electrically conductive terminal, an intermediate insulator containing the terminal, an electrically conductive outer conductor containing the intermediate insulator, and an inner seal.

Patent Literature 2 discloses the following: The connector is inserted through a cylindrical back housing so that a tab protruding on the outer surface of the connector is in contact with the front face of an outer conductor holder of the back housing. The contact portion is welded so that the outer conductor is electrically conductive to the back housing for sealing properties.

Patent Literature 3 discloses a connector including an outside terminal in a cylindrical housing, a terminal shield member covering the outside terminal in the housing, and a device shield member joined to the other end of the terminal shield and shielding an electronic device.

Patent Literature 3 discloses the following: The terminal shield member is in the form of a cylinder provided with gold or nickel plating. The device shield member is in the form of a plate provided with nickel plating and having a through hole at the center. The device shield member is welded at its central position to the terminal shield member.

### Citation List

### Patent Literature

Patent Literature 1: Japanese Unexamined Patent Application Publication, Tokukai, No. 2019-67740
Patent Literature 2: Japanese Unexamined Patent Application Publication, Tokukai, No. 2019-133748
Patent Literature 3: Japanese Unexamined Patent Application Publication, Tokukai, No. 2018-45792

### Summary of Invention

### Technical Problem

A connector module needs to function not only to connect a communication cable such as a coaxial cable with a connection target such as a camera module, but also to block external electromagnetic waves.

For this reason, a connector case may contain a shield electrically connected to the ground of a terminal module. However, with the configuration in which the edge of an opening in a shield case is in elastic contact with the outer surface of the terminal module as disclosed in Patent Literature 1, the opening may be separated from the outer surface of the terminal module by a gap through which electromagnetic waves propagate to the outside. The above configuration may thus let noise leak in terms of electromagnetic interference (EMI) or electromagnetic compatibility (EMC).

A connector module may be incapable of satisfying demands based on EMC properties if in particular the connector module transmits signals at high speeds such as video signals.

The connector module disclosed in Patent Literature 1 is configured such that the elastic portions of the shield case are elastically deformed into contact with the outer surface of the terminal module. A contact defect at the contact portion may prevent the shield case from producing a sufficient shielding effect.

The configuration of Patent Literature 1 may be combined with the configuration of Patent Literature 2 or 3 of welding the terminal module to the shield. However, welding portions with complicated shape is technically difficult, and may prolong the production.

The above circumstances have led to a demand for a connector module that includes a connector unit and a shield easily connectable to each other and that has a good shielding effect.

### Solution to Problem

A connector module according to this disclosure is characteristically a connector module connectable to an end of a communication cable to receive a signal transmitted through the communication cable, the connector module including: a connector unit; and a case holding the connector unit, the connector unit including: a shaft-shaped terminal made of an electrically conductive material; a cylindrical shell made of an electrically conductive material and coaxial with the shaft-shaped terminal; an insulator between an outer surface of the shaft-shaped terminal and an inner surface of the shell; and a shield disposed in the case and electrically connected to the shell, the shell including a flange protruding radially outward, the shield having a through hole with an inner diameter that allows insertion of a portion of the shell and that prevents insertion of the flange, with the portion of the shell through the through hole, the shield and the flange being electrically connected to each other by heat melting to provide an electrically conductive joined portion.

With the above configuration, the electrically conductive joined portion results from inserting a portion of the connector unit through the through hole in the shield, bringing the flange of the shell of the connector unit into contact with the shield, and heat-melting the flange and the shield for connection with electric conduction. With the above configuration, the shield is in the case with the connector unit held by the case, eliminating the need to include in the case an element to which the shield is attachable. The flange and the shield are heat-melted and overlap with each other. This prevents leakage of electromagnetic waves from the electrically conductive joined portion, which is a portion of contact between the flange and the shield. The connector module thereby includes a connector unit and a shield easily connectable to each other and has a good shielding effect.

The connector module may be further configured such that the shield has a ring-shaped shield contact area surrounding the through hole and facing the flange, the flange has a ring-shaped flange contact area facing the shield, the electrically conductive joined portion is a result of the shield contact area and the flange contact area being electrically connected to each other, and a first one of the shield contact area and the flange contact area is provided with first plating and is electrically connected to a second one of the shield contact area and the flange contact area by heat melting of the first plating.

With the above configuration, a first one of the ring-shaped shield contact area and the ring-shaped flange contact area is provided with first plating. Heat-melting the first plating allows the shield contact area and the flange contact area to be electrically connected to each other.

The connector module may be further configured such that the shield has a ring-shaped shield contact area surrounding the through hole and facing the flange, the flange has a ring-shaped flange contact area facing the shield, the electrically conductive joined portion is a result of the shield contact area and the flange contact area being electrically connected to each other, and a second one of the shield contact area and the flange contact area has a plurality of protrusions each provided with second plating and is electrically connected to a first one of the shield contact area and the flange contact area by heat melting of the second plating.

With the above configuration, a second one of the ring-shaped shield contact area and the ring-shaped flange contact area has projections provided with second plating. Heat-melting the second plating on the protrusions allows the shield contact area and the flange contact area to be electrically connected to each other.

The connector module may be desirably further configured such that the plurality of protrusions are arranged annularly and evenly spaced apart from one another circumferentially, and adjacent ones among the plurality of protrusions are separated from each other by a gap of not larger than one-twentieth of a wavelength of a maximum frequency of the signal.

With the above configuration, the protrusions are separated from each other by a gap of not larger than one-twentieth of the wavelength of the maximum frequency of the signal, improving the shielding performance.

The connector module may be further configured such that the case includes an outer wall with an insertion hole that allows insertion of the portion of the shell, the flange has (i) a ring-shaped case contact face that is, with the portion of the shell through the insertion hole, in contact with an inner face of the outer wall and (ii) a ring-shaped melting face that is, with the portion of the shell through the insertion hole, apart from the inner face, and the melting face is radially outward of the case contact face and includes the flange contact area.

With the above configuration, inserting the shell through an insertion hole in an outer wall of the case brings the case contact face (which is of the flange of the shell) into contact with the inner surface of the outer wall of the case, and separates the melting face (which is radially outward of the case contact face and includes the flange contact area) from the inner surface of the outer wall of the case by a gap. As a result, with the contact area of the shield joined to the flange contact area by heat melting, the gap receives the shield.

The connector module may be further configured such that the electrically conductive joined portion is electrically connected by laser welding.

The above configuration minimizes the melting area, preventing unevenness at the electrically conductive joined portion and stabilizing the joint between the shield and the shell.

The connector module may be further configured such that the shield has a ring-shaped shield contact area surrounding the through hole and facing the flange, the flange has a ring-shaped flange contact area facing the shield, and the electrically conductive joined portion is a result of the shield contact area and the flange contact area being electrically connected to each other.

With the above configuration, heat melting based on laser welding allows the shield contact area and the flange contact area to be electrically connected to each other.

The connector module may be further configured such that the electrically conductive joined portion includes a plurality of welding portions arranged annularly and evenly spaced apart circumferentially, and adjacent ones among the plurality of welding portions are separated from each other by a gap of not larger than one-twentieth of the wavelength of the maximum frequency of the signal.

With the above configuration, laser welding has a gap of not larger than one-twentieth of the wavelength of the maximum frequency of the signal, improving the shielding performance.

### Brief Description of Drawings

Fig. 1 is a schematic view of a camera unit and a connector module as an embodiment.
Fig. 2 is an exploded perspective view of a connector unit and a receptacle for an embodiment.
Fig. 3 is a cross-sectional view of a connector unit and a receptacle for an embodiment with a front case and a rear case detached from each other.
Fig. 4 is a cross-sectional view of a connector unit and a receptacle for an embodiment with a front case and a rear case coupled with each other.
Fig. 5 is a diagram illustrating how a shell and a shield for an embodiment are welded to each other.
Fig. 6 is a diagram illustrating how protrusions are arranged on a shield for an embodiment.
Fig. 7 is a diagram illustrating how welding portions are arranged on a shield for an embodiment.
Fig. 8 is a cross-sectional view of a connector unit for an alternative embodiment.
Fig. 9 is an enlarged view of an electrically conductive joined portion illustrated in Fig. 8 and its surroundings.

### Description of Embodiments

The description below deals with an embodiment of this disclosure with reference to drawings.

### [Basic Configuration]

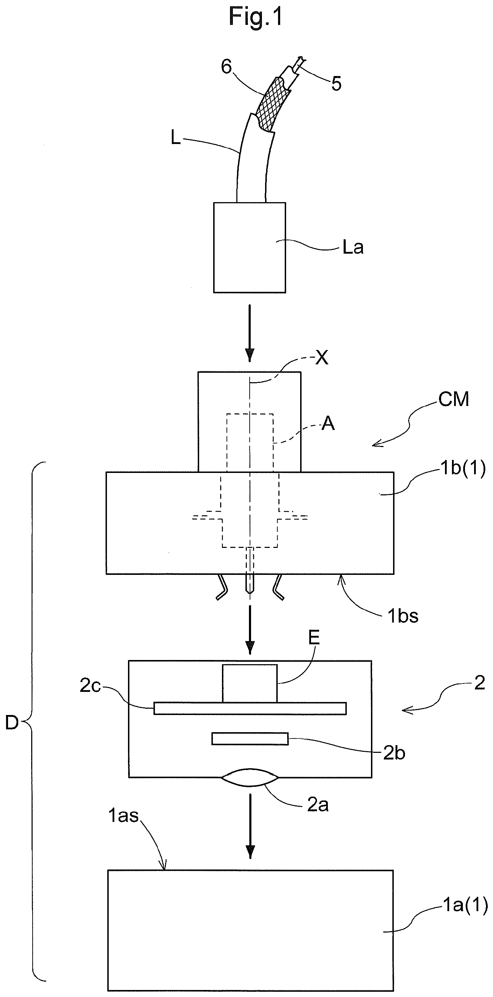

Fig. 1 illustrates a connector module CM including a rear case 1b (which is an example of the "case") as a portion of a camera casing 1 and a connector unit A.

The connector module CM is connectable to a coaxial cable L (which is an example of the "communication cable") through which to transmit information on images captured by a camera unit D mounted in the body of an automobile or the like (vehicle-mounted camera).

The present embodiment is configured such that the information on captured images is displayed on a monitor (not illustrated in the drawings) or stored in a storage area such as a storage (not illustrated in the drawings) or a memory (not illustrated in the drawings). The information on captured images is not only simply displayed on the monitor, but also, for instance, processed as necessary by an electronic control unit (ECU) before being displayed on the monitor, or subjected to image analysis and fed back for driving assistance such as parking assistance.

As illustrated in Fig. 1, the camera unit D includes a box-shaped camera casing 1 and a camera module 2 in the camera casing 1. The camera casing 1 includes a front case 1a made of resin and configured to house the camera module 2 and a rear case 1b made of resin, provided with the connector unit A, and coupled to the front case 1a.

The camera module 2 includes an imaging lens 2a, an imaging element 2b, and a substrate 2c. The imaging element 2b serves to form an image with use of light from the imaging lens 2a. The substrate 2c is provided with a receptacle E and a processing device (not illustrated in the drawings) configured to convert the image formed by the imaging element 2b into a predetermined form (including a moving image) and output the image as converted.

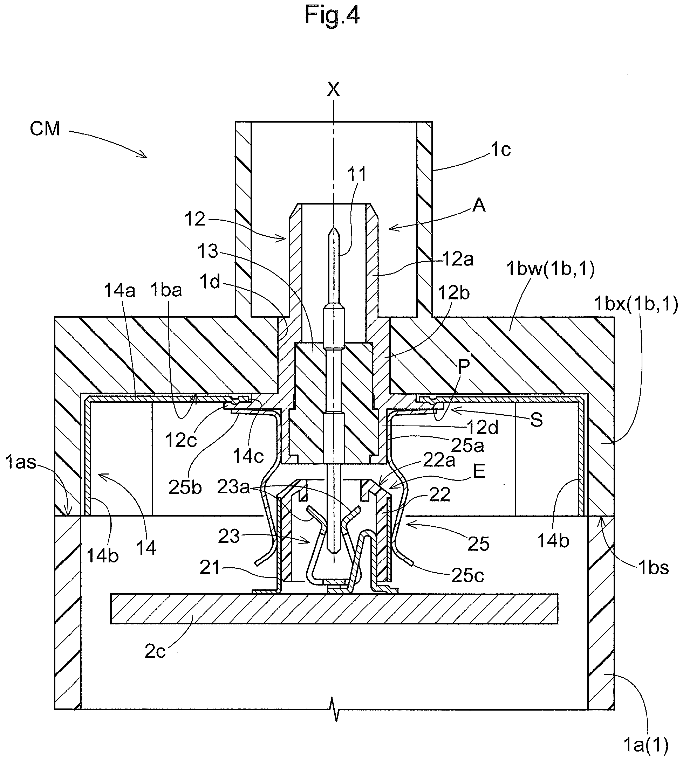

The camera casing 1 is configured to become an integral whole as a result of the front case 1a being coupled to the rear case 1b such that the front case 1a has a front opening section 1as in contact with a rear opening section 1bs in the rear case 1b. As illustrated in Fig. 4, coupling the front case 1a to the rear case 1b connects the connector unit A to the receptacle E.

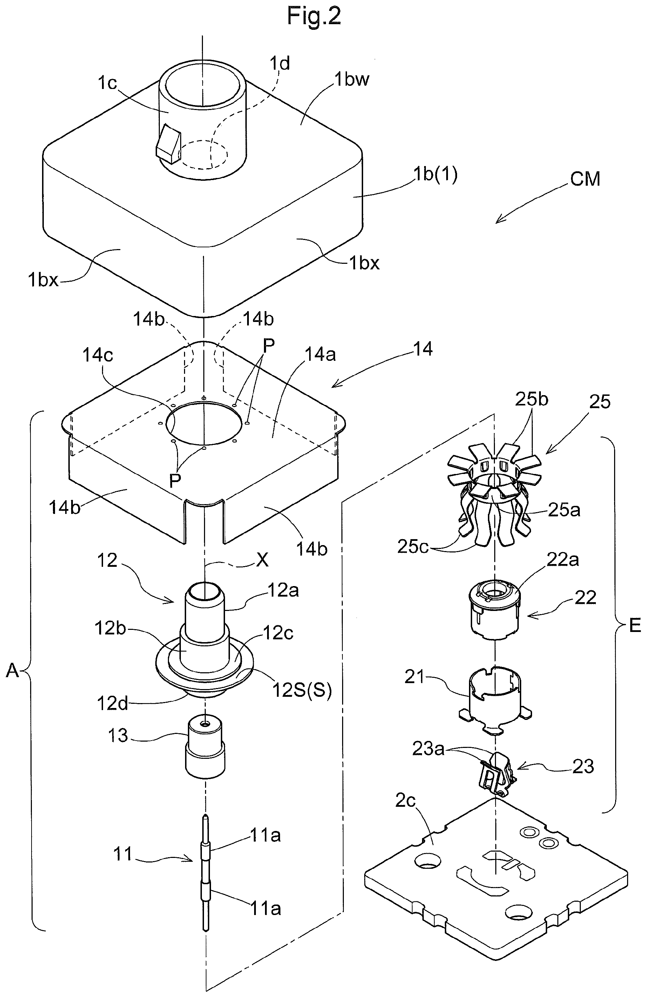

As illustrated in Fig. 2, the rear case 1b includes an outer wall 1bw opposite to the front case 1a and four side walls 1bx perpendicular to the outer wall 1bw. The outer wall 1bw has a central portion integrally provided with a cylindrical output housing 1c to which the coaxial cable L is connectable.

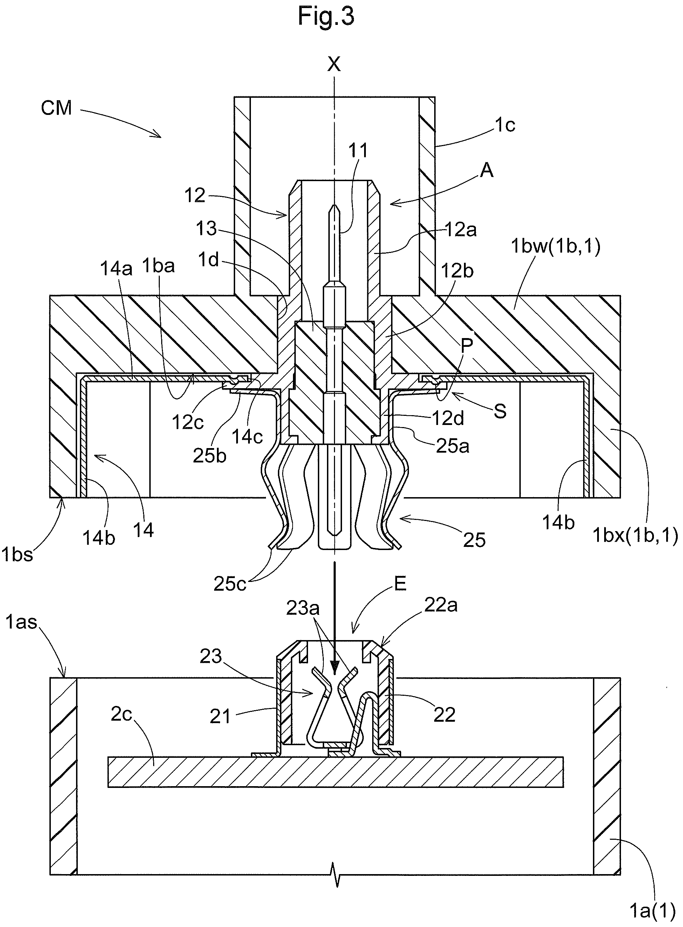

As illustrated in Figs. 3 and 4, the outer wall 1bw has an insertion hole 1d circular as viewed along the central axis X. The connector unit A is fixedly inserted in the insertion hole 1d. The connector unit A includes a shaft-shaped terminal 11 with a center corresponding to the central axis X (which is an example of the "axis"). With the connector unit A fixedly inserted in the insertion hole 1d, the central axis X coincides with the center of the insertion hole 1d.

### [Connector Unit]

As illustrated in Figs. 2 to 4, the connector unit A includes a shaft-shaped terminal 11, a shell 12, and a holder 13 (which is an example of the "insulator"). The shaft-shaped terminal 11 is made of an electrically conductive metal. The shell 12 is coaxial with the shaft-shaped terminal 11. The shaft-shaped terminal 11 is made of an electrically conductive metal and contains, for example, 20% or more of zinc. The holder 13 is insulating and contains, for example, resin. The holder 13 is between the outer surface of the shaft-shaped terminal 11 and the inner surface of the shell 12. Specifically, the holder 13 is in an area between the outer surface of the shaft-shaped terminal 11 and the inner surface of the shell 12, and is in contact with the outer surface of the shaft-shaped terminal 11 and the inner surface of the shell 12.

The shell 12 includes a cylindrical conductive portion 12a, a first large-diameter portion 12b, a flange 12c, and a second large-diameter portion 12d arranged in this order from the tip (away from the receptacle E) to the base end (toward the receptacle E) and die-casted integrally with one another. The conductive portion 12a and the first large-diameter portion 12b each have an outer diameter that allows insertion thereof into a through hole 14c in a shield 14 (described later).

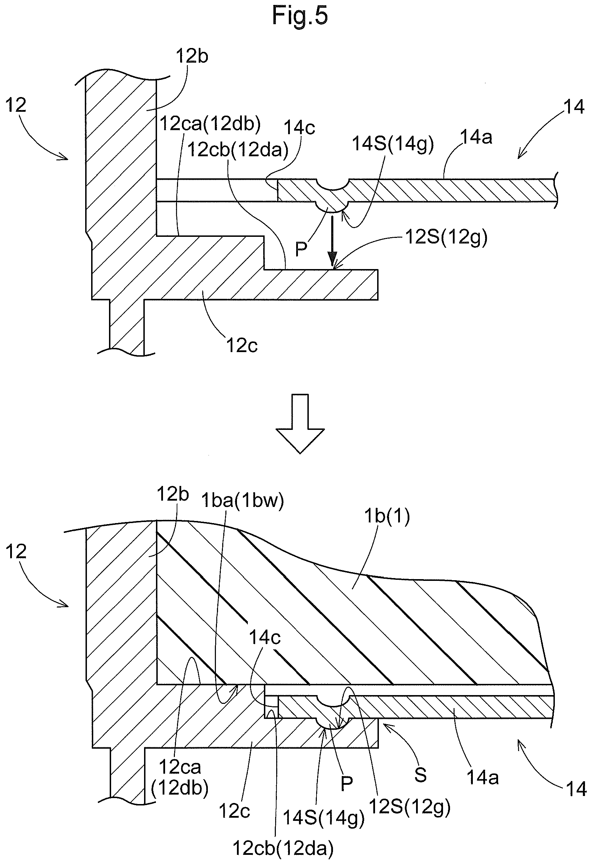

The shell 12 is configured as follows: The second large-diameter portion 12d is slightly smaller in diameter than the first large-diameter portion 12b. The flange 12c is between the first and second large-diameter portions 12b and 12d. The flange 12c protrudes radially (which is an example of the "radially") outward with the central axis X at the center to be larger in diameter than the first and second large-diameter portions 12b and 12d. The flange 12c includes a step raised along the central axis X. The description below uses the term "step bottom 12da" to refer to that half of the step which faces toward the receptacle E along the central axis X and the term "step top 12db" to refer to that half of the step which faces away from the receptacle E along the central axis X (see Fig. 5).

As described above, the connector unit A includes a resin holder 13. The holder 13 is molded with the shaft-shaped terminal 11 inserted therein to be integral with the shaft-shaped terminal 11. The holder 13 as integrated with the shaft-shaped terminal 11 is press-fitted into the shell 12 at its base end. The shell 12 is then caulked by high-spin caulking. This allows the shell 12 to hold the holder 13 and prevents the holder 13 from being detached from the shell 12. The high-spin caulking process includes rotating the shell 12 and caulking the base end of the shell 12 (that is, an end of the second large-diameter portion 12d). The shaft-shaped terminal 11 includes two large-diameter portions 11a for impedance matching of the connector unit A and prevention of detachment of the holder 13 (see Fig. 2).

As illustrated in Fig. 4, the shaft-shaped terminal 11 has a central axis X, and the shell 12 has a central axis coincident with the central axis X. The connector unit A is configured such that the shell 12 serves as a ground terminal, whereas the shaft-shaped terminal 11 serves as a signal terminal.

The connector unit A further includes a shield 14 electrically connected to the flange 12c of the shell 12. The shield 14 is made of an electrically conductive metal plate such as a copper plate or an aluminum plate. The shield 14 is contained in the rear case 1b.

As illustrated in Fig. 3, the shield 14 includes a body 14a oriented along the inner face 1ba of the outer wall 1bw of the rear case 1b and four plate-shaped side auxiliary walls 14b (hereinafter referred to as "side shield sections 14b") oriented along the respective inner faces of the side walls 1bx. The four side shield sections 14b are integral with the body 14a and electrically conductive to the body 14a. The four side shield sections 14b may alternatively be separate from the body 14a, in which case the four side shield sections 14b are welded or otherwise joined to the body 14a for electric conduction.

As illustrated in Fig. 2, the shield 14 is configured such that the body 14a has a circular through hole 14c through which the shell 12 (or its first large-diameter portion 12b) of the connector unit A extends. The through hole 14c has an inner diameter that allows insertion of the first large-diameter portion 12b of the shell 12 (which is an example of the "portion of the shell 12") of the connector unit A and that prevents insertion of the flange 12c of the shell 12.

As illustrated in Fig. 5, the connector unit A is configured such that the body 14a of the shield 14 is joined to the step bottom 12da of the flange 12c of the shell 12 by heat melting. This causes the shield 14 to be electrically connected to the shell 12. The description below uses the term "contact areas" to refer to those areas which are intended for electric conduction and that have not yet been joined and the term "electrically conductive joined portion S" to refer to that portion of a contact area which has been joined by heat melting and is electrically connected. The contact areas include a shield contact area 14S as a contact area of the shield 14 and a flange contact area 12S as a contact area of the shell 12 (or of the flange 12c). The present embodiment is configured such that the electrically conductive joined portion S and the contact areas are each in the shape of a ring.

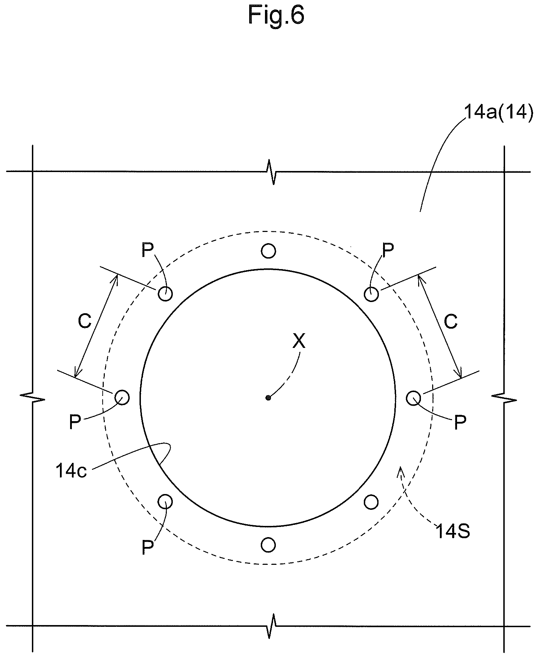

Specifically, as illustrated in Fig. 6, the shield contact area 14S is a ring-shaped area around the through hole 14c in the body 14a of the shield 14. The shield contact area 14S partially overlaps with the step bottom 12da (see Fig. 5) of the flange 12c of the shell 12 as viewed along the central axis X. Further, as illustrated in Figs. 2 and 5, the flange contact area 12S is a ring-shaped area of the step bottom 12da of the flange 12c of the shell 12 which area faces the shield contact area 14S along the central axis X. As mentioned above, the contact areas are intended for electric connection between the shield 14 and the shell 12. In other words, the shield contact area 14S is to be electrically connected (or joined) to the flange 12c of the shell 12, whereas the flange contact area 12S is to be electrically connected (or joined) to the body 14a of the shield 14.

As illustrated in Fig. 5, the flange 12c has a case contact face 12ca close to the center (or close to the central axis X) and a melting face 12cb close to the outer edge (or away from the central axis X). Specifically, the step top 12db of the flange 12c has a ring-shaped case contact face 12ca in contact with the inner face 1ba (see Fig. 4 as well) of the outer wall 1bw with the connector unit A (or the first large-diameter portion 12b of the shell 12) through the insertion hole 1d in the outer wall 1bw. Further, the step bottom 12da of the flange 12c has a ring-shaped melting face 12cb radially outward of the case contact face 12ca. The present embodiment is configured such that the melting face 12cb is provided with tin plating 12g (which is an example of the "first plating"). The flange contact area 12S is on the melting face 12cb, meaning that the flange contact area 12S is provided with tin plating 12g (which is an example of the "first plating"). The flange 12c has a flat face facing the receptacle E, so that the step bottom 12da is thinner than the step top 12db.

The melting face 12cb is apart from the inner face 1ba of the outer wall 1bw along the central axis X with the connector unit A (or the first large-diameter portion 12b of the shell 12) through the insertion hole 1d in the outer wall 1bw. In other words, with the case contact face 12ca in contact with the inner face 1ba, the melting face 12cb is separated from the inner face 1ba by a predetermined gap, which receives the body 14a of the shield 14. The through hole in the shield 14 has an inner diameter larger than the outer diameter of the case contact face 12ca.

As illustrated in Fig. 6, the shield 14 is provided with two or more protrusions P in the shield contact area 14S and along a virtual circle having a predetermined radius with the central axis X as the center. The two or more protrusions P are arranged annularly and evenly spaced apart from one another circumferentially (that is, along the virtual circle).

The two or more protrusions P are each covered by tin plating 14g (which is an example of the "second plating"), which covers the ring-shaped shield contact area 14S including the protrusions P. The protrusions P may alternatively be covered by nickel plating (which is an example of the "second plating") instead of the tin plating 14g. No plating may be provided on at least either the melting face 12cb or the surface of the two or more protrusions P. The tin plating 14g and the nickel plating each have a melting point lower than that of each of the respective materials of the shield 14 and the shell 12.

The connector unit A is configured such that the shield 14 and the shell 12 are joined to each other by projection welding. The present embodiment is configured such that the shield 14 and the shell 12 are joined to each other through a process of pressing the shield contact area 14S, which is covered by tin plating 14g and which includes two or more protrusions P, against the flange contact area 12S, which is covered by tin plating 12g, and causing electric current to flow through a portion at which the more protrusions P are in contact with flange contact area 12S to thermally melt the tin plating 14g and the tin plating 12g. This allows the shield 14 to be supported by the shell 12 and electrically conductive to the shell 12, which has a ground potential. Fig. 5 omits how the shield 14 and the shell 12 are joined to each other as a result of melting of the tin plating 14g on the protrusions P and the tin plating 12g in the flange contact area 12S.

The two or more protrusions P, which are for use in projection welding, may influence high-frequency signals transmitted through the connector unit A. In view of that, the present embodiment is configured as illustrated in Fig. 6 such that circumferentially adjacent ones among the two or more protrusions P are separated from each other by at least a minimum gap C of not larger than one-twentieth of the wavelength of the maximum frequency of signals transmitted through the connector unit A.

Dipole antenna theory makes it known that a radio wave that an antenna receives has an intensity proportional to the length of the antenna, the electric current value, and the frequency and that an antenna with a length not larger than one-twentieth of the wavelength receives extremely small noise. On the basis of this theory and regarding the distance between circumferentially adjacent protrusions P as equivalent to the length of an antenna, the present embodiment is configured such that such adjacent protrusions P are separated from each other by a gap C of not larger than one-twentieth of the wavelength of the maximum frequency to reduce noise.

As illustrated in Figs. 3 and 4, the connector unit A is configured to be press-fitted in the insertion hole 1d in the outer wall 1bw such that the first large-diameter portion 12b of the shell 12 is press-fitted in and held by the surface that defines the insertion hole 1d. This allows the connector unit A to be held by the rear case 1b, and also allows the conductive portion 12a of the shell 12 to have a tip protruding in the output housing 1c.

With the connector unit A held by the outer wall 1bw, the body 14a of the shield 14 is close to or in contact with the inner face 1ba of the outer wall 1bw, whereas the side shield sections 14b of the shield 14 are close to or in contact with the respective inner faces of the side walls 1bx.

### [Receptacle]

As illustrated in Figs. 2 and 3, the receptacle E includes a cylindrical contact 21, a contact case 22, and a press-fit contact 23. The cylindrical contact 21 is made of an electrically conductive metal (for example, a copper alloy) and supported by the substrate 2c. The contact case 22 is made of an insulating resin and fitted in the cylindrical contact 21. The press-fit contact 23 is made of an electrically conductive meta (for example, a copper alloy), supported by the substrate 2c, and disposed in the contact case 22.

The cylindrical contact 21 is soldered to a printed circuit disposed on the substrate 2c and having a ground potential, so that the cylindrical contact 21 is electrically conductive to and has the ground potential. The contact case 22 has a guide surface 22a extending circumferentially, facing away from the substrate 2c (that is, facing the connector unit A), and inclined relative to the central axis X.

The press-fit contact 23 is soldered to a printed circuit disposed on the substrate 2c and connected to a signal line, so that the press-fit contact 23 is electrically conductive to the signal line. The press-fit contact 23 includes a pair of press-fit pieces 23a structured to be so close to each other as to sandwich the base end of the shaft-shaped terminal 11 of the connector unit A. The pair of press-fit pieces 23a are elastic. Bringing the rear case 1b close to the receptacle E brings the pair of press-fit pieces 23a into contact with the base end of the shaft-shaped terminal 11 of the connector unit A so that the pair of press-fit pieces 23a sandwich the base end of the shaft-shaped terminal 11. This causes the press-fit contact 23 to be electrically connected (or conductive) to the shaft-shaped terminal 11.

As illustrated in Figs. 2 and 3, the connector unit A includes a connector 25 for the shell 12 to be electrically conductive to the cylindrical contact 21. The connector 25 includes a ring 25a, two or more first contact pieces 25b, and two or more second contact pieces 25c. The ring 25a is fixedly fitted around the second large-diameter portion 12d of the shell 12. The first contact pieces 25b extend from the ring 25a toward the outer circumference of the flange 12c. The second contact pieces 25c extend from the ring 25a toward the outer surface of the cylindrical contact 21.

The ring 25a, the two or more first contact pieces 25b, and the two or more second contact pieces 25c are made of an electrically conductive metal (for example, a copper alloy) and are integral with one another. The two or more first contact pieces 25b are elastic and extend radially with the central axis X at the center as viewed along the central axis X (see Fig. 2 as well). As illustrated in Figs. 3 and 4, the two or more first contact pieces 25b are in contact with that face of the flange 12c of the shell 12 which is opposite to the outer wall 1bw of the rear case 1b to remain electrically connected to the shell 12.

The two or more second contact pieces 25c have respective first ends on the ring 25a and are elastic in such a direction as to press the outer surface of the cylindrical contact 21 from radially outward. Bringing the rear case 1b close to the receptacle E causes the two or more second contact pieces 25c to sequentially (i) come into contact with the guide surface 22a of the contact case 22, (ii) elastically deform in such a direction that the respective outer ends of the second contact pieces 25c move away from the central axis X, and (iii) come into contact with the cylindrical contact 21 due to the elasticity for electric connection.

### [Setup Mode]

The connector module CM is, as described above, configured as follows: As illustrated in Fig. 4, the front case 1a and the rear case 1b of the camera unit D are coupled to each other with the front opening section 1as in the front case 1a in close contact with the rear opening section 1bs in the rear case 1b. The relative approach of the two cases to each other causes the shaft-shaped terminal 11 of the connector unit A to be sandwiched between the pair of press-fit pieces 23a of the press-fit contact 23 of the receptacle E, resulting in electric connection between the shaft-shaped terminal 11 and the press-fit contact 23. This causes the signal lines on the substrate 2c to be conductive to the shaft-shaped terminal 11.

The connector module CM is configured as follows: The above operation also brings the two or more second contact pieces 25c into contact with the outer surface of the cylindrical contact 21 of the receptacle E. This causes ground lines on the substrate 2c to be electrically connected to the shell 12 of the connector unit A. This causes the shell 12, the shield 14, the connector 25, the cylindrical contact 21, and the substrate 2c to be electrically connected to the ground potential.

The connector module CM is configured as follow: As illustrated in Fig. 1, inserting a terminal connector La included in the coaxial cable L into the output housing 1c of a housing B causes a center conductor 5 included in the coaxial cable L to be electrically connected to the shaft-shaped terminal 11 of the connector unit A and causes an outer conductor 6 included in the coaxial cable L to be electrically connected (or conductive) to the shell 12 of the connector unit A.

This causes the signal lines on the substrate 2c to be conductive to the center conductor 5 of the coaxial cable L and the ground lines of the substrate 2c to the outer conductor 6 of the coaxial cable L. This in turn allows information on captured images to be transmitted from the camera unit D to the coaxial cable L.

### [Advantages of Embodiment]

The connector module CM is configured as follows: Press-fitting the connector unit A (which includes a shaft-shaped terminal 11, a shell 12, and a holder 13 integral with one another) fixedly into the insertion hole 1d in the outer wall 1bw of the rear case 1b fixes the shell 12 and the rear case 1b relative to each other.

The flange 12c and the shield 14 are heat-melted and overlap with each other. This prevents leakage of electromagnetic waves. With the connector unit A fixed to the rear case 1b, the shield 14 of the connector unit A, which is conductive to the ground, is in the rear case 1b. This blocks external noise from affecting the inside of the camera casing 1.

The shield 14 is supported by the shell 12 of the connector unit A and electrically conductive to the shell 12 through the electrically conductive joined portion S. As described above, the shield 14 is provided with two or more protrusions P on a surface of the body 14a which surface is in a shield contact area 14S around the through hole 14c. The protrusions P are covered by tin plating 14g. The flange 12c of the shell 12 has a flange contact area 12S covered by tin plating 12g.

The electrically conductive joined portion S results from pressing the shield contact area 14S and the flange contact area 12S, which are configured as above, and joining the two by projection welding, which involves causing electric current to flow through a portion at which the more protrusions P are in contact with flange contact area 12S. The electrically conductive joined portion S results from heat-melting the tin plating 14g and the tin plating 12g, each of which has a melting point lower than that of the shield 14 or the flange 12c of the shell 12. The electrically conductive joined portion S, which results from heat-melting the tin plating 14g and the tin plating 12g by projection welding, reduces the electric current necessary for connection and shortens the time necessary for connection, as compared to spot welding, which involves heat-melting two metal contacts by electricity to weld the metal contacts to each other.

The above configuration produces a good shielding effect, reduces influence by noise, and allows for good heat conduction between the shell 12 and the shield 14 for a heat dissipating effect. Further, adjacent ones among the two or more protrusions P are separated from each other by at least a minimum gap C of not larger than one-twentieth of the wavelength of the maximum frequency of signals transmitted through the connector unit A. This prevents the protrusions P from affecting signals transmitted through the connector unit A.

### [Alternative Embodiments]

This disclosure may be configured as below in addition to the embodiments described above. Any element described below that functions as described for the embodiments above is assigned with the same reference numeral as that for embodiments above.

(a) The embodiment described above is configured such that the two or more protrusions P are on the shield 14. The two or more protrusions P may alternatively be on the flange contact area 12S of the shell 12. This alternatively embodiment may be configured such that the protrusions P, which are on the flange contact area 12S, are covered by tin plating 12g (which is an example of the "second plating"), whereas the shield contact area 14S, which faces the protrusions P, is covered by tin plating 14g (which is an example of the "first plating") and that the shield contact area 14S is pressed against the protrusions P and is joined thereto by projection welding, which involves causing electric current to flow through a portion at which the more protrusions P are in contact with flange contact area 12S. The melting face 12cb, which includes the flange contact area 12S (on which the protrusions P are disposed), may be covered by nickel plating instead of the tin plating 12g. No plating may be provided on at least either the surface of the two or more protrusions P, which are on the flange contact area 12S, or the shield contact area 14S.

This alternative embodiment (a), which includes an electrically conductive joined portion S configured conversely to the embodiment described above such that the two or more protrusions P are on the flange contact area 12S, allows for easy connection and good conduction similarly to the embodiment described above.

The electrically conductive joined portion S may alternatively be formed by forming two or more protrusions P on the shield 14 as with the embodiment described above, forming two or more protrusions P on the shell 12 as with this alternative embodiment (a), covering the two or more protrusions P on the shield 14 with tin plating 14g or nickel plating, covering the two or more protrusions P on the shell 12 with tin plating 12g or nickel plating, bringing the two or more protrusions P on the shield 14 into contact with the surface of the flange 12c, bringing the two or more protrusions P on the shell 12 into contact with the shield 14, and projection-welding the two or more protrusions P on the shield 14 to the flange 12c and the two or more protrusions P on the shell 12 to the shield 14. The projection welding step may alternatively be performed with the two or more protrusions P on the shield 14 in contact with the two or more protrusions P on the shell 12.

In the case where the connector unit A includes protrusions P for use to join the shell 12 and the shield 14 to each other as described above, the connector unit A may include any number of protrusions P at any positions. Even in this case, circumferentially adjacent ones among the two or more protrusions P are desirably separated from each other by at least a minimum gap C of not larger than one-twentieth of the wavelength of the maximum frequency of signals transmitted through the connector unit A.

(b) The shield 14 is not necessarily rectangular and oriented along the outer wall 1bw of the rear case 1b, and may be, for instance, in the shape of a hemisphere having a top with a through hole 14c. With such a hemispherical shield 14, inserting the connector unit A into the through hole 14c and joining the shield 14 to the flange 12c at the respective contact areas allows the shield 14 to cover an area extending from the flange 12c of the shell 12 to an area around the receptacle E.

The shield 14 is not limited in shape to the combination of rectangular plates as described for the embodiment or a hemisphere as with alternative embodiment (b). The shield 14 may alternatively have any other shape; for instance, it may include a disk-shaped, flat body 14a through which the connector unit A is insertable and a cylindrical wall along the circumference of the body 14a.

(c) The electrically conductive joined portion S may be formed by spot welding, that is, by pressurizing a portion of each of the respective contact areas of the shield 14 and the flange 12c of the shell 12 for contact therebetween and causing electric current to flow through the contact portion for welding.

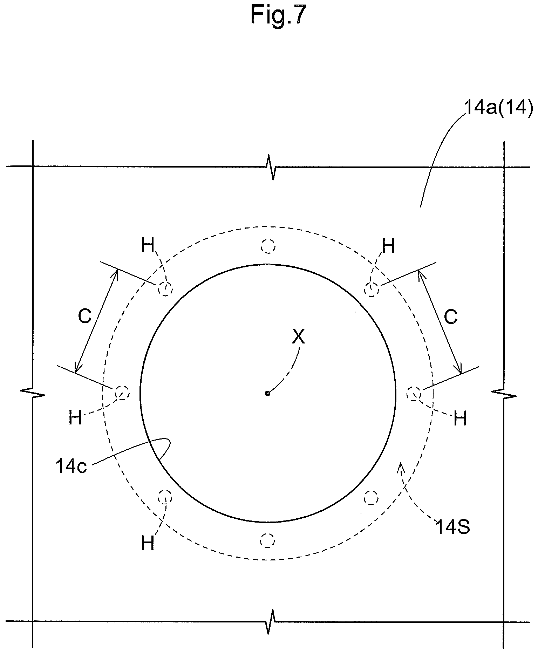

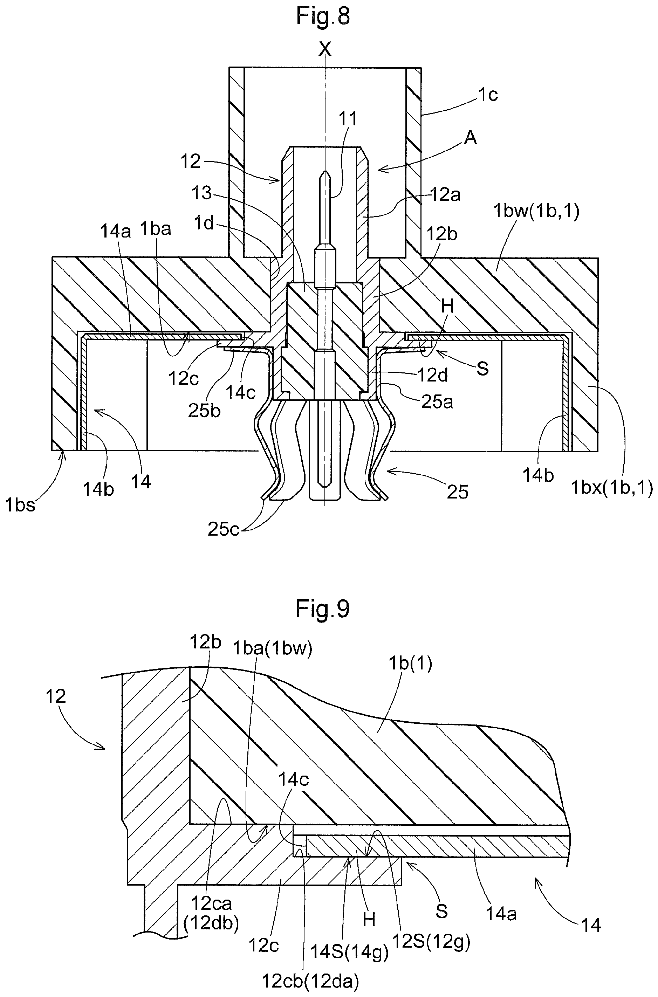

(d) The embodiment described above is an example in which the shield 14 and the flange 12c are heat-melted by resistance welding such as projection welding or spot welding. The shield 14 and the flange 12c may alternatively be heat-melted by laser welding. This alternatively embodiment is configured such that at least either of the contact areas (namely, the flange contact area 12S and the shield contact area 14S) includes two or more portions to be welded by laser welding (hereinafter referred to as "welding portions H") and that laser-welding the two or more welding portions H forms an electrically conductive joined portion S. The present embodiment is configured as illustrated in Fig. 7 such that the two or more welding portions H are arranged annularly along a virtual circle having a predetermined radius with the central axis X as the center and evenly spaced apart from one another and that adjacent ones among the two or more welding portions H are separated from each other by a gap C of not larger than one-twentieth of the wavelength of the maximum frequency of signals. The present embodiment may omit the protrusions P as illustrated in Fig. 8. At least either the flange contact area 12S or the shield contact area 14S, which are to be laser-welded, may be covered by plating such as tin plating 12g, or nickel plating. No plating may be provided on the flange contact area 12S and the shield contact area 14S.

The arrangements disclosed for the above embodiments (including the alternative embodiments; hereinafter the same) may each be combined with an arrangement disclosed for another embodiment, as long as such a combination does not cause a contradiction. Further, the embodiments disclosed in the present specification are mere examples. The present disclosure is not limited to those embodiments, and may be altered as appropriate, as long as such an alteration does not result in a failure to attain an object of the present disclosure.

### Industrial Applicability

This disclosure is applicable to a connector module.

### Reference Signs List

- 1b: Rear case (case)
- 1bw: Outer wall
- 1bx: Side wall
- 1d: Insertion hole
- 11: Shaft-shaped terminal
- 12: Shell
- 12c: Flange
- 12ca: Case contact face (melting face)
- 12S: Flange contact area (contact area)
- 12g: Tin plating (first plating)
- 13: Holder (insulator)
- 14: Shield
- 14a: Body
- 14c: Through hole
- 14g: Tin plating (second plating)
- 14S: Shield contact area (contact area)
- A: Connector unit
- C: Gap
- H: Welding portion
- L: Coaxial cable (communication cable)
- P: Protrusion
- S: Electrically conductive joined portion
- X: Central axis (axis)
- CM: Connector module

## Claims

1. A connector module connectable to an end of a communication cable to receive a signal transmitted through the communication cable,
the connector module comprising:
a connector unit; and
a case holding the connector unit,
the connector unit including:
a shaft-shaped terminal made of an electrically conductive material;
a cylindrical shell made of an electrically conductive material and coaxial with the shaft-shaped terminal;
an insulator between an outer surface of the shaft-shaped terminal and an inner surface of the shell; and
a shield disposed in the case and electrically connected to the shell,
the shell including a flange protruding radially outward,
the shield having a through hole with an inner diameter that allows insertion of a portion of the shell and that prevents insertion of the flange,
with the portion of the shell through the through hole, the shield and the flange being electrically connected to each other by heat melting to provide an electrically conductive joined portion.

2. The connector module according to claim 1, wherein
the shield has a ring-shaped shield contact area surrounding the through hole and facing the flange,
the flange has a ring-shaped flange contact area facing the shield,
the electrically conductive joined portion is a result of the shield contact area and the flange contact area being electrically connected to each other, and
a first one of the shield contact area and the flange contact area is provided with first plating and is electrically connected to a second one of the shield contact area and the flange contact area by heat melting of the first plating.

3. The connector module according to claim 1 or 2, wherein
the shield has a ring-shaped shield contact area surrounding the through hole and facing the flange,
the flange has a ring-shaped flange contact area facing the shield,
the electrically conductive joined portion is a result of the shield contact area and the flange contact area being electrically connected to each other, and
a second one of the shield contact area and the flange contact area has a plurality of protrusions each provided with second plating and is electrically connected to a first one of the shield contact area and the flange contact area by heat melting of the second plating.

4. The connector module according to claim 3, wherein
the plurality of protrusions are arranged annularly and evenly spaced apart from one another circumferentially, and
adjacent ones among the plurality of protrusions are separated from each other by a gap of not larger than one-twentieth of a wavelength of a maximum frequency of the signal.

5. The connector module according to claim 2, wherein
the case includes an outer wall with an insertion hole that allows insertion of the portion of the shell,
the flange has (i) a ring-shaped case contact face that is, with the portion of the shell through the insertion hole, in contact with an inner face of the outer wall and (ii) a ring-shaped melting face that is, with the portion of the shell through the insertion hole, apart from the inner face, and
the melting face is radially outward of the case contact face and includes the flange contact area.

6. The connector module according to any one of claims 1 to 5, wherein
the electrically conductive joined portion is electrically connected by laser welding.

7. The connector module according to claim 6, wherein
the shield has a ring-shaped shield contact area surrounding the through hole and facing the flange,
the flange has a ring-shaped flange contact area facing the shield, and
the electrically conductive joined portion is a result of the shield contact area and the flange contact area being electrically connected to each other.

8. The connector module according to claim 7, wherein
the electrically conductive joined portion includes a plurality of welding portions arranged annularly and evenly spaced apart circumferentially, and
adjacent ones among the plurality of welding portions are separated from each other by a gap of not larger than one-twentieth of the wavelength of the maximum frequency of the signal.
